# FASCICULE DE BREVET EUROPEEN

(11) **EP 0 678 823 B1**
(45) Date de publication et mention de la délivrance du brevet: **30.12.1998**
(21) Numéro de dépôt: 95400724.1
(22) Date de dépôt: 31.03.1995
(51) Int. Cl.: G06K 9/74

(54) **Procédé pour la reconnaissance automatique d'un panneau de signalisation routière, et dispositif pour la mise en oeuvre de ce procédé**
Verfahren zur automatischen Verkehrszeichenerkennung und das Verfahren durchführende Vorrichtung
Method for automatic recognition of traffic signs, and device for carrying out the method

(30) Priorité: 19.04.1994 FR 9404654
(43) Date de publication de la demande: 25.10.1995
(73) Titulaire: AUTOMOBILES PEUGEOT, 75116 Paris (FR); AUTOMOBILES CITROEN, 92200 Neuilly-sur-Seine (FR)
(72) Inventeur: Guibert, Laurent, F-29200 Brest (FR); Attia, Mondher, F-92120 Montrouge (FR); Servel, Alain, F-92190 Meudon (FR)
(74) Mandataire: Durand, Yves Armand Louis

(56) Documents cités:
- EP-A- 0 532 379
- US-A- 4 371 866
- US-A- 5 175 775
- APPLIED OPTICS, vol. 32, no. 10, Septembre 1993 NEW YORK US, pages 5079-5088, XP 000393407 QING TANG AND BAHRAM JAVIDI 'Multiple-object detection wit a chirp encoded joint transform correlator'

## Description

La présente invention a essentiellement pour objet un procédé pour la reconnaissance automatique d'un objet tel que par exemple un panneau de signalisation routière.

Elle vise également un dispositif comportant application de ce procédé.

Il a déjà été proposé des systèmes aptes à réduire les interventions du conducteur d'un véhicule et suppléant éventuellement aux défaillances de celui-ci en cas de danger par exemple.

C'est ainsi que, d'une manière générale, on a déjà proposé des systèmes de reconnaissance automatique de panneaux, tels que des panneaux de limitation de vitesse, grâce auxquels on réalise une corrélation entre l'image du panneau et une image de référence susceptible de correspondre à l'image du panneau pour délivrer un signal lorsque les deux images sont identiques. Un tel dispositif est divulgué dans EP-A-0 532 379 qui forme la base du préambule des revendications indépendantes.

Toutefois, les systèmes proposés jusqu'à présent ne permettaient pas un traitement et une détection suffisamment rapides des informations, de façon à pouvoir agir assez rapidement sur la conduite du véhicule, par exemple sur le freinage de celui-ci.

Aussi, la présente invention a pour but de remédier notamment à l'inconvénient ci-dessus en proposant un procédé et un dispositif de reconnaissance automatique qui comportent un système de détection réagissant très rapidement au signal correspondant à l'information reçue, de sorte qu'il n'y a pratiquement aucune temporisation, qui représenterait un danger pour le véhicule, entre l'information captée et sa détection, même si le véhicule roule à très grande vitesse.

A cet effet, l'invention a pour objet un procédé pour la reconnaissance automatique d'un objet tel qu'un panneau de signalisation routière, du type consistant à:
a) afficher sur un premier modulateur une image d'entrée contenant l'image du panneau à reconnaître et des images de panneaux de référence ;
b) faire passer un faisceau laser à travers ce premier modulateur et une première lentille pour le focaliser sur un second modulateur ou analogue apte à enregistrer un spectre d'intensité ;
c) éclairer ce second modulateur avec un faisceau laser ;
d) faire passer ledit faisceau laser sortant du second modulateur à travers une deuxième lentille pour obtenir un autre spectre fourni à un système de détection ; et
e) déterminer, à partir dudit spectre, s'il y a identité entre le panneau à reconnaître et l'un des panneaux de référence,
caractérisé en ce que l'étape e) consiste à détecter, dans le plan focal de la deuxième lentille, des pics de corrélation des différents panneaux contenus dans l'image d'entrée, de telle façon que la présence de pics d'intensité supérieure à un seuil donné et décalés par rapport au centre optique de l'image indique qu'il y a identité entre le panneau à reconnaître et l'un des panneaux de référence.

Ce procédé est encore caractérisé en ce que l'image du paysage contenant le panneau à reconnaître subit une détection de contour afin de l'adapter au premier modulateur et de diminuer la dynamique spectrale.

Suivant encore une autre caractéristique de ce procédé, l'image d'entrée ne contenant que deux panneaux de référence, on ne capte qu'une partie de l'image du paysage contenant le panneau à reconnaître afin que celui-ci se situe dans l'image d'entrée sur un axe passant entre les deux références.

On précisera encore ici que si le nombre de références est supérieur à deux, le panneau à reconnaître est comparé successivement à plusieurs groupes comportant chacun au maximum deux références.

Cette invention vise encore un dispositif pour la mise en oeuvre du procédé répondant aux caractéristiques ci-dessus, et du type comprenant : une source laser émettant un faisceau apte à traverser le second modulateur sur lequel a été préalablement enregistré un spectre d'intensité de panneaux de référence et d'un panneau à reconnaître ; une lentille convergente placée en aval du second modulateur ; et des moyens d'observation et/ou d'analyse du spectre obtenu au plan focal de la lentille, caractérisé en ce que lesdits moyens d'observation comprennent des moyens de détection et de séparation des pics significatifs de l'identité d'un panneau de référence avec un panneau à reconnaître, et des pics parasites.

Selon une autre caractéristique de ce dispositif, les moyens de séparation précités comprennent un masque pour polariser différemment les parties du faisceau contenant les différents pics et un moyen optique de séparation en polarisation placé en aval du masque.

Le masque est, suivant un mode de réalisation préféré, une lame placée dans le plan focal de la lentille précitée et comprenant quatre zones symétriques par rapport à l'axe optique du faisceau, deux zones symétriques par rapport au centre de la lame étant des lames demi-onde, tandis que les deux autres ne sont pas polarisantes.

Suivant encore une autre caractéristique de ce dispositif, les moyens de détection sont constitués par des caméras CCD linéaires, tandis qu'une lentille sphérique associée à une lentille cylindrique est disposée entre la lame précitée et le moyen optique de séparation en polarisation auquel font suite les caméras CCD précitées.

Mais d'autres caractéristiques et avantages de l'invention apparaîtront mieux dans la description détaillée qui suit et se réfère aux dessins annexés, donnés uniquement à titre d'exemple, et dans lesquels:

La figure 1 est une vue schématique d'ensemble d'un dispositif de reconnaissance automatique conforme à cette invention.

La figure 2 est une vue de face d'un masque de polarisation utilisé dans ce dispositif.

La figure 3 est une vue de face de l'image d'entrée contenant deux panneaux de référence et un panneau à reconnaître.

Les figures 4 à 6 illustrent, en vue de face, le spectre de corrélation obtenu au niveau du masque de polarisation, pour différentes positions des panneaux de référence et du panneau à reconnaître dans l'image d'entrée.

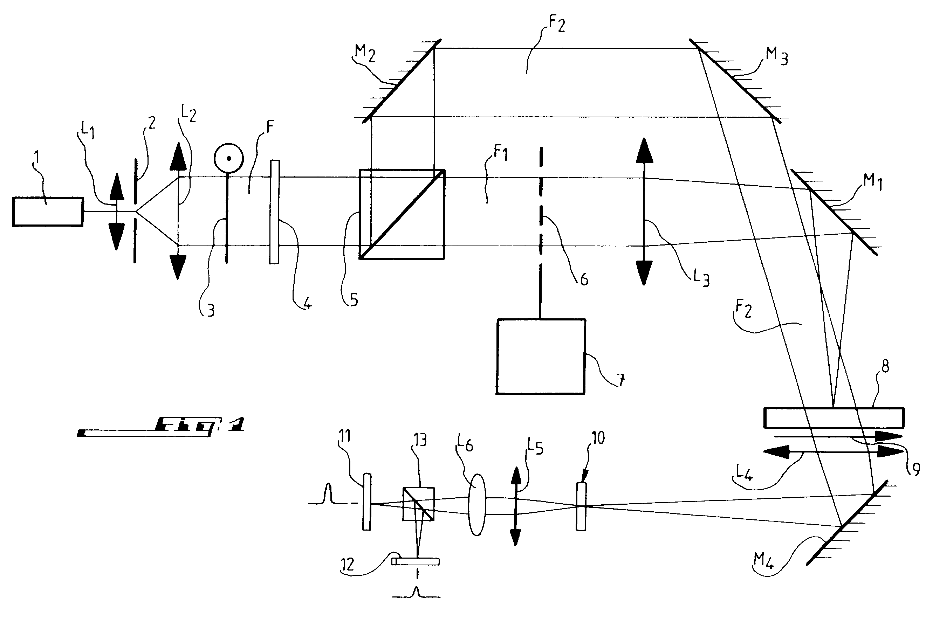

Comme on le voit clairement sur la figure 1, un dispositif de reconnaissance automatique de panneaux selon cette invention comprend essentiellement un laser continu hélium-néon ou à semi-conducteur 1, une lentille L₁, un filtre spatial illustré schématiquement en 2, une lentille L₂ permettant d'obtenir un faisceau laser F parallèle, un polariseur 3, un obturateur optique 4 et un premier cube séparateur en polarisation 5 susceptible de diviser le faisceau laser F, en un faisceau F₁ qui sera le faisceau permettant l'enregistrement de l'information, et un deuxième faisceau F₂ qui permettra la lecture de l'information, comme on l'expliquera en détail plus loin.

Le faisceau F₁ traverse un modulateur 6, tel que par exemple un modulateur de lumière spatial électriquement adressable (EASLM), lui-même relié à une caméra 7 embarquée sur un véhicule (non représenté). Ce faisceau F₁, après avoir traversé une lentille L₃, parvient sur un miroir M₁ qui le réfléchit sur un modulateur 8, tel que par exemple un modulateur de lumière spatial optiquement adressable (OASLM). Sur ce modulateur 8 sera inscrit le spectre d'intensité de l'image enregistrée dans le modulateur 6 et transportée par le faisceau laser F₁.

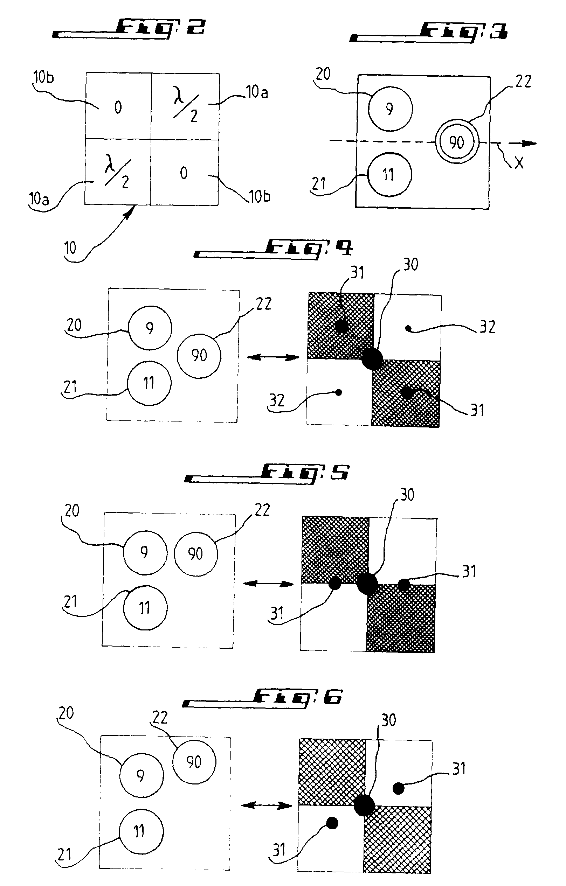

L'obturateur optique 4, permettant de changer la polarisation du faisceau laser F, permet à celui-ci de suivre le chemin F₂ après réflexions successives par les miroirs M₂ et M₃. Le faisceau F₂ traverse le modulateur 8, en aval duquel est prévu un polariseur 9, une lentille L₄, et un miroir M₄ réfléchissant ledit faisceau F₂ et le focalisant sur un masque de polarisation 10 illustré sur la figure 2.

Ce masque se présente sous la forme d'une lame formée de quatre zones symétriques par rapport au centre de la lame et séparées par un axe horizontal et un axe vertical. Deux zones symétriques 10a sont des lames demi-onde pour la longueur d'onde du laser utilisé, tandis que les deux autres zones 10b sont tout simplement constituées par du verre, et n'apporteront donc aucun changement de polarisation du faisceau laser traversant ces zones.

En aval du masque 10 est prévue une optique constituée par une lentille sphérique L₅ à laquelle est associée une lentille cylindrique L₆ imageant le plan du masque de polarisation 10 sur deux caméras CCD linéaires 11 et 12, et ce par l'intermédiaire d'un cube séparateur en polarisation 13.

Mais il importe maintenant d'expliquer le fonctionnement du dispositif qui vient d'être décrit.

D'une manière générale, le faisceau F, F₁ transporte l'image enregistrée sur le modulateur 6, et on obtient sur le modulateur 8 un spectre d'intensité qui traduit la transformée de Fourier de l'image captée par le faisceau laser F₁ après passage dans le modulateur 6. Ensuite, l'obturateur optique 4, modifiant la polarisation, permettra la déviation du faisceau F suivant le chemin F₂ constituant le faisceau de lecture, et ce faisceau F₂ passera au travers du modulateur 8 et de la lentille L₄ qui permet d'obtenir dans le plan du masque 10 un spectre de corrélation traduisant la transformée de Fourier du spectre d'intensité enregistré préalablement par le modulateur 8.

Plus précisément, l'image enregistrée sur le modulateur 6, appelée image d'entrée, est constituée, suivant un exemple, et comme on le voit bien sur la figure 3, de deux panneaux de référence 20, 21, et d'un panneau à reconnaître 22, en l'occurrence un panneau de limitation de vitesse 90 visualisé dans un paysage (non représenté) par la caméra 7. On observera ici que les panneaux de référence 20, 21 signifient en réalité 90 et 110 et ne comportent donc pas le chiffre zéro qui n'est pas significatif. Par ailleurs, l'image du panneau 22 enregistrée sur le modulateur 6 résulte d'une détection de contour effectuée par la caméra 7 et ne faisant apparaître sur le modulateur 6 que les contours nets du panneau dans le paysage. Il est à noter, comme on le voit encore sur la figure 3, que les références 20 et 21, préalablement enregistrées sur le modulateur 6, sont situées dans la partie gauche, l'une en dessous de l'autre, tandis que l'image 22 du panneau 90 à reconnaître se situe dans la partie droite de l'image sur un axe horizontal X passant entre les deux références 20 et 21. On observera que la caméra 7 permettra, de façon connue en soi, de sélectionner une portion du paysage qu'elle visualise de façon que le panneau à reconnaître apparaisse toujours à la position représentée en 22 sur la figure 3.

Le décalage des références 20, 21 et du panneau à reconnaître 22 est transformé en déphasage lors de leur interférence dans le plan de Fourier de la lentille L₃.

Ainsi, le modulateur 8, comme dit plus haut, enregistrera un spectre d'intensité variable de l'image d'entrée, lequel spectre sera lu par le faisceau F₂ et subira, à son tour, grâce à la lentille L₄, une transformation de Fourier.

Ainsi, au niveau du plan du masque 10, on obtiendra des pics de corrélation que l'on décrira maintenant, en se reportant aux figures 4 à 6.

Sur la figure 4, partie gauche, on a reproduit la même image d'entrée que celle illustrée sur la figure 3, et sur la partie droite de la figure 4, sont représentés schématiquement les divers pics de corrélation obtenus.

On voit que le spectre de corrélation obtenu est constitué par un pic central 30 très lumineux et des pics latéraux 31 moins intenses, dus aux intercorrélations des panneaux entre eux. Ces pics d'intercorrélation 31 sont distribués suivant une direction correspondant à la direction qui serait matérialisée par une ligne passant par le panneau de référence 20 et le panneau à reconnaître 22. On a montré en 32 des petits pics parasites.

Sur la figure 5, on retrouve des pics latéraux moins intenses 31 mais qui sont ici distribués suivant une horizontale en raison de l'horizontale formée par le panneau de référence 20 et le panneau à reconnaître 22.

Enfin, sur la figure 6, les pics 31 sont orientés suivant une diagonale différente de celle représentée sur la figure 4, et correspondent à l'oblicité de la ligne passant par les panneaux 20 et 22.

Il est important d'ajouter ici que, pour éviter tout risque de confusion, il est particulièrement avantageux, comme expliqué précédemment, de faire en sorte que l'on se trouve dans la configuration de la figure 4. En effet, dans le cas de la figure 5, si un panneau à reconnaître est un panneau de limitation de vitesse 110, et s'il se trouve à droite du panneau de référence 21, on aura la même configuration horizontale de pics secondaires 31, comme on le voit sur la droite de la figure 5. Egalement, dans le cas de la figure 6, on aurait le même spectre avec un panneau de limitation de vitesse 110 situé sensiblement dans la même position que, ou légèrement en dessous du panneau 22 visible sur la gauche de la figure 6. Revenant à la figure 4, si à la place du panneau 90, repéré en 22, on avait un panneau 110, on aurait un alignement des pics 31 suivant une diagonale inverse de celle représentée sur la partie droite de la figure 4. Bien entendu, l'appareillage est prévu de telle sorte que les pics 31 présentent un seuil d'intensité relativement important par rapport aux pics parasites 32, de façon à être sûr de l'identité du panneau à reconnaître avec le panneau de référence.

Avant l'obtention du spectre de corrélation au niveau du masque 10, il est à noter que la polarisation du faisceau F₂ est remise en forme à l'aide du polariseur 9. Dans le plan de corrélation, la lame 10, bien visible sur la figure 2, polarisera dans un sens la partie du faisceau traversant ses parties 10a, et sera sans influence sur le restant du faisceau traversant les parties 10b. Ainsi, par exemple, en se reportant à la figure 4, les parties du faisceau correspondant aux pics 31 subiront un changement de polarisation, tandis que les pics parasites 32 ne subiront aucun changement de polarisation. Autrement dit, les pics de corrélation 31 et les pics parasites 32 possèderont des polarisations rectilignes orthogonales. Le système à lentille sphérique L₅ et lentille cylindrique L₆ permettra d'obtenir une image aplatie du plan de corrélation suivant une ligne, ce qui est nécessaire pour la détection par les caméras CCD linéaires 11 et 12.

Mais, étant donné que l'image aplatie risque de procurer une confusion des pics de corrélation 31 et des pics parasites 32, on utilisera un cube séparateur en polarisation, tel que 13, qui renverra chaque groupe de pics sur un détecteur différent, à savoir les caméras 11 et 12, la caméra 12 recevant par exemple le groupe de pics 32, et la caméra 11 recevant le groupe de pics 31. Ainsi, on récupérera sur chaque caméra des signaux électriques correspondants, et un moyen approprié et non représenté recevant ces signaux pourra agir sur par exemple la conduite du véhicule, puisque le panneau de limitation de vitesse (90 km/heure) aura ainsi pu être reconnu.

Par ailleurs, on observera que les caméras CCD linéaires 11,12 peuvent fonctionner à une fréquence très élevée, de l'ordre de 20 MHz, de sorte qu'elles ne limitent pas la cadence de traitement du modulateur 8. De plus, elles présentent une meilleure définition et sont moins coûteuses que les caméras rapides. En outre, le dispositif de l'invention permettra de réaliser un multiplexage temporel des panneaux de référence par rapport à la cadence vidéo à laquelle est captée l'image du panneau à reconnaître dans un paysage. En d'autres termes, on peut comparer le panneau à reconnaître successivement avec une pluralité de groupes de deux panneaux de référence.

Bien entendu, l'invention n'est nullement limitée au mode de réalisation décrit et illustré qui n'a été donné qu'à titre d'exemple.

## Revendications

1. Procédé pour la reconnaissance automatique d'un objet tel qu'un panneau de signalisation routière, du type consistant à :
a) afficher sur un premier modulateur une image d'entrée contenant l'image du panneau à reconnaître (22) et des images de panneaux de référence (20, 21) ;
b) faire passer un faisceau laser (F, F₁) à travers ce premier modulateur et une première lentille (L₃) pour le focaliser sur un second modulateur ou analogue (8) apte à enregistrer un spectre d'intensité ;
c) éclairer ce second modulateur (8) avec un faisceau laser (F, F₂) ;
d) faire passer ledit faisceau laser sortant du second modulateur (8) à travers une deuxième lentille (L₄) pour obtenir un autre spectre fourni à un système de détection ; et
e) déterminer, à partir dudit spectre, s'il y a identité entre le panneau à reconnaître et l'un des panneaux de référence, en détectant, dans le plan focal de la deuxième lentille (L₄), des pics de corrélation des différents panneaux contenus dans l'image d'entrée, de telle façon que la présence de pics (31) d'intensité supérieure à un seuil donné et décalés par rapport au centre optique de l'image indique qu'il y a identité entre le panneau à reconnaître et l'un des panneaux de référence,
caractérisé en ce qu'on polarise différemment (10) les parties du faisceau correspondant auxdits pics (31) et aux autres pics, et on sépare en polarisation ces différentes parties du faisceau pour les renvoyer sur des détecteurs différents (11, 12).

2. Procédé selon la revendication 1, caractérisé en ce que l'image du paysage contenant le panneau à reconnaître subit une détection de contour afin de l'adapter au premier modulateur et de diminuer la dynamique spectrale.

3. Procédé selon la revendication 1 ou 2, caractérisé en ce que l'image d'entrée ne contenant que deux panneaux de référence (20, 21), on ne capte qu'une partie de l'image du paysage contenant le panneau à reconnaître afin que celui-ci se situe dans l'image d'entrée sur un axe (X) passant entre les deux panneaux de référence.

4. Procédé selon l'une des revendications 1 à 3, caractérisé en ce que le nombre de références étant supérieur à deux, le panneau à reconnaître est comparé successivement à plusieurs groupes comportant chacun au maximum deux références.

5. Dispositif pour la mise en oeuvre du procédé selon l'une des revendications 1 à 4 et du type comprenant : une source (1) émettant un faisceau laser (F) apte à traverser le second modulateur (8) sur lequel a été préalablement enregistré un spectre d'intensité de panneaux de référence et d'un panneau à reconnaître ; une lentille convergente (L₄) placée en aval du second modulateur (8) et des moyens d'observation et/ou d'analyse du spectre obtenu au plan focal de la lentille (L₄), lesdits moyens d'observation comprenant des moyens de détection et de séparation des pics (31) significatifs de l'identité d'un panneau de référence (20) avec un panneau à reconnaître (22), et des pics parasites (32), caractérisé en ce que lesdits moyens de séparation (10, 11, 12, 13) comprennent un masque (10) pour polariser différemment les parties du faisceau contenant les différents pics et un moyen optique de séparation en polarisation (13) placé en aval du masque (10).

6. Dispositif selon la revendication 5, caractérisé en ce que le masque précité (10) est une lame placée dans le plan focal de la lentille précitée (L₄) et comprenant quatre zones symétriques par rapport à l'axe optique du faisceau, deux zones symétriques (10a) par rapport au centre de la lame étant des lames demi-onde, tandis que les deux autres (10b) ne sont pas polarisantes.

7. Dispositif selon la revendication 5 ou 6, caractérisé en ce que les moyens de détection sont constitués par des caméras CCD linéaires (11,12), tandis qu'une lentille sphérique (L₅) associée à une lentille cylindrique (L₆) est disposée entre la lame précitée (10) et le moyen optique de séparation en polarisation (13) auquel font suite les caméras CCD précitées.

## Patentansprüche

1. Verfahren zur automatischen Erkennung eines Gegenstandes, wie eines Straßenverkehrskennzeichnungsschildes, derjenigen Gattung, die darin besteht :
a) ein das Bild des zu erkennenden Schildes (22) und Bilder von Bezugsschildern (20, 21) enthaltendes Eingangsbild auf einem ersten Modulator anzuzeigen ;
b) ein Laserstrahlbündel (F, F₁) durch diesen ersten Modulator und durch eine erste Linse (L₃), um es auf einen zur Registrierung eines Intensitätssprektrum geeigneten zweiten Modulator oder dergleichen (8) zu fokusieren, durchgehen zu lassen ;
c) diesen zweiten Modulator (8) mit einem Laserstrahlbündel (F, F₂) zu beleuchten ;
d) das aus dem zweiten Modulator (8) herauskommende besagte Laserstrahlbündel durch eine zweite Linse (L₄), zur Erzielung eines durch ein Erfassungssystem erzeugtes anderes Spektrum durchgehen zu lassen ; und
e) ausgehend von dem besagten Spektrum, zu bestimmen, ob es Gleichheit zwischen dem zu erkennenden Schild und einem der Bezugsschilder gibt, indem man Korrelationsgipfelspitzwerte der verschiedenen in dem Eingangsbild enthaltenden Schilder in der Brennpunktebene der zweiten Linse (L₄) derart ermittelt, daß das Vorhandensein von in bezug auf den optischen Mittelpunkt des Bildes versetzten Gipfelspitzwerten (31) der Intensität, die größer als eine gegebene Schwelle ist, anzeigt, daß es Gleichheit zwischen dem zu erkennenden Schild und einem der Bezugsschilder gibt,
dadurch gekennzeichnet, daß man die den besagten Gipfelspitzwerten (31) und den anderen Gipfelspitzwerten entsprechenden Teile des Strahlenbündels unterschiedlich polarisiert (10) und man diese verschiedenen Teile des Strahlenbündels polarisationsgemäß trennt, um sie auf die verschiedenen Meßwertgeber (11, 12) zurückzusenden.

2. Verfahren gemäß Anspruch 1, dadurch gekennzeichnet, daß das das zu erkennende Schild enthaltende Landschaftsbild einer Umrißabtastung unterworfen wird, um es an den ersten Modulator anzupassen und die Spektrumdynamik zu verringern.

3. Verfahren nach Anspruch 1 oder 2, dadurch gekennzeichnet, daß, bei dem nur zwei Bezugsschilder (20,21) enthaltende Eingangsbild, man nur einen Teil des das zu erkennende Schild enthaltenden Landschaftsbildes auffängt, damit das Schild in dem Eingangsbild auf einer zwischen den beiden Bezugsschildern verlaufenden Achse (X) liegt.

4. Verfahren gemäß einem der Ansprüche 1 bis 3, dadurch gekennzeichnet, daß, wenn die Anzahl von Bezugsschildern größer als zwei ist, das zu erkennende Schild mit mehreren jeweils höchstens zwei Bezugschilder enthaltenden Gruppen aufeinanderfolgend vergleicht wird.

5. Vorrichtung zur Durchführung des Verfahrens gemäß einem der Ansprüche 1 bis 4 und derjeniger Gattung mit : einer ein Laserstrahlenbündel (F) aussendenden Quelle (1), das fähig ist, den zweiten Modulator (8), auf welchem ein Intensitätsspektrum von Bezugsschildern und von einem zu erkennenden Schild vorher registriert worden ist, durchzusetzen ; einer stromabwärts des zweiten Modulators (8) und der Mittel zur Beobachtung und/oder zur Analyse des in der Brennpunktebene der Linse (L₄) erzielten Spektrums gestellten Konvexlinse (L₄), wobei die besagten Beobachtungsmittel Mittel zur Suche und Trennung der Gipfelspitzwerte (31), die für die Gleichheit eines Bezugsschildes (20) mit einem zur erkennenden Schild (22) von Bedeutung sind, und der Störgipfelspitzwerte (23) aufweisen, dadurch gekennzeichnet, daß die besagten Trennmittel (10,11,12,13) eine Maske (10), um die die verschiedenen Gipfelspitzwerte enthaltenden Teile des Strahlenbündels unterschiedlich zu polarisieren und ein stromabwärts der Maske (10) gestelltes optisches Mittel zur polarisierungsgemäßen Trennung (13) umfassen.

6. Vorrichtung nach Anspruch 5, dadurch gekennzeichnet, daß die vorgenannte Maske (10) eine in der Brennpunktebene der vorgenannten Linse (L₄) liegende und vier in bezug auf die optische Achse des Strahlenbündels symmetrische Bereiche aufweisende Platte ist, wobei zwei in bezug auf den Mittelpunkt der Platte symmetrische Bereiche (10a) Halbwellenplatten sind, während die beiden anderen (10b) nicht polarisierend sind.

7. Vorrichtung nach Anspruch 5 oder 6, dadurch gekennzeichnet, daß die Suchmittel durch lineare CCD-Kameras (11,12) gebildet werden, während eine einer zylindrischen Linse (L₆) zugeordnete sphärische Linse (L₅) zwischen der vorgenannten Platte (10) und dem optischen Mittel zur polarisationsgemäßen Trennung (13), dem die vorgenannten CCD-Kameras nachgeschaltet sind, angeordnet ist.

## Claims

1. Method for the automatic recognition of an object such as a road signalling panel, of the type consisting in :
a) displaying on a first modulator an input image containing the image of the panel (22) to be recognized and images of reference panels (20,21) ;
b) passing a laser beam (F, F₁) through this first modulator and a first lens (L₃) for focussing it upon a second modulator or the like (8) adapted to record an intensity spectrum ;
c) illuminating this second modulator (8) with a laser beam (F, F₂) ;
d) passing the said laser beam exiting from the second modulator (8) through a second lens (L₄) to obtain another spectrum provided by a detection system ; and
e) determining from the said spectrum whether there is an identity between the panel to be recognized and one of the reference panels by sensing, in the focal plane of the second lens (L₄), peaks of correlation of the different panels contained in the input image, in such a manner that the presence of peaks (31) of an intensity higher than a given threshold and offset with respect to the optical centre of the image indicates that there is an identity between the panel to be recognized in one of the reference panels,
characterized in that one differently polarizes (10) the portions of the beam corresponding to the said peaks (31) and to the other peaks and one separates in the polarization these different portions of the beam for sending them back upon different sensors (11,12).

2. Method according to claim 1, characterized in that the image of the scenery containing the panel to be recognized undergoes an outline detection in order to adapt it to the first modulator and to decrease the spectrum dynamics.

3. Method according to claim 1 or 2, characterized in that with the input image containing two reference panels (20,21) only, one only senses one portion of the image of the scenery containing the panel to be recognized in order that the latter be located in the input image on an axis (X) passing between both reference panels.

4. Method according to one of claims 1 to 3, characterized in that with the number of references being higher than two, the panel to be recognized is successively compared to several groups comprising each one two references at the maximum.

5. Device for carrying out the method according to one of claims 1 to 4 and of the type comprising : a source (1) emitting a laser beam (F) adapted to pass through the second modulator (8) onto which has been previously recorded an intensity spectrum of reference panels and of a panel to be recognized ; a converging lens (L₄) placed downstream of the second modulator (8) and means for the observation and/or the analysis of the spectrum obtained in the focal plane of the lens (L4), the said observation means comprising means for the detection and the separation of the peaks (31) significant for the identity of a reference panel (20) with a panel to be recognized (22) and of the parasitic peaks (32), characterized in that the said separation means (10,11,12,13) comprise a mask (10) for differently polarizing the portions of the beam containing the different peaks and an optical means for the separation in polarization (13) placed downstream of the mask (10).

6. Device according to claim 5, characterized in that the aforesaid mask (10) is a plate placed in the focal plane of the aforesaid lens (L₄) and comprising four zones symmetrical with respect to the optical axis of the beam, two zones (10a) symmetrical with respect to the centre of the plate being half-wave plates, whereas the two others (10b) are not polarizing.

7. Device according to claim 5 or 6, characterized in that the detection means are constituted by linear charge-coupled-device cameras (11,12), whereas a spherical lens (L₅) associated with one cylindrical lens (L₆) is disposed between the aforesaid plate (10) and the optical means for the separation in polarization (13) after which are placed the aforesaid C.C.D.-cameras.
